# EUROPÄISCHE PATENTSCHRIFT

(11) **EP 3 507 017 B1**
(45) Veröffentlichungstag und Bekanntmachung des Hinweises auf die Patenterteilung: **15.02.2023**
(21) Anmeldenummer: 17768028.7
(22) Anmeldetag: 30.08.2017
(51) Int. Cl.: B04C 3/02, B04C 3/04, B04C 3/00, B04C 9/00

(54) **VORRICHTUNG UND VERFAHREN ZUR REINIGUNG EINES GASSTROMES**
DEVICE AND METHOD FOR CLEANING A GAS FLOW
DISPOSITIF ET PROCÉDÉ POUR PURIFIER UN FLUX GAZEUX

(30) Priorität: 30.08.2016 DE 102016116171
(43) Veröffentlichungstag der Anmeldung: 10.07.2019
(73) Patentinhaber: Dieffenbacher GmbH Maschinen- und Anlagenbau, 75031 Eppingen (DE)
(72) Erfinder: KIMYONSEN, Deniz, 75031 Eppingen (DE); ALLERÖDDER, Wolfgang, 75031 Eppingen (DE); WENG, Martin, 75031 Eppingen (DE)
(74) Vertreter: Hartdegen, Helmut
(86) Internationale Anmeldenummer: PCT/EP2017/071811
(87) Internationale Veröffentlichungsnummer: WO 2018/041918

(56) Entgegenhaltungen:
- WO-A1-2009/140993
- WO-A1-2011/005116
- WO-A1-2016/133647
- DE-C1- 4 015 831
- US-A1- 2011 296 987

## Beschreibung

Die Erfindung betrifft eine Vorrichtung zur Reinigung eines Gasstromes nach dem Oberbegriff des Patentanspruches 1.

Die Erfindung betrifft weiter ein Verfahren zur Reinigung eines Gasstromes nach dem Oberbegriff des Patentanspruches 10.

Derartige Vorrichtungen und Verfahren können insbesondere bei der Herstellung von Werkstoffplatten aus Holz oder Holzpellets benötigt werden. Sie dienen dabei zum Abtrennen von Holzstäuben und flüchtigen organischen Verbindungen in bzw. nach pneumatischen Förder- und Trocknungssystemen.

Aus DE 26 56 151 A1 ist eine Vorrichtung zum Abtrennen von Festkörperverunreinigungen aus einem Gasstrom bekannt. DE 103 35 194 A1 zeigt einen Vorabscheider zur Entfernung von Verunreinigungen aus der Luft in einem Luftansaugsystem eines Automobilmotors. US 4 629 481 A zeigt eine modulare Trenneinheit zum Trennen einer Flüssigkeit aus einem Gas-Flüssigkeits-Gemisch.

EP 1 458 490 B1 zeigt einen Zyklonabscheider, mit einem Rohr und einer Einströmöffnung und einer Ausströmöffnung, wobei in dem Rohr ein stationärer Wirbelkörper angeordnet ist, der die Gas/Flüssigkeitsströmung in eine Spiralbewegung versetzt, damit die in der Gasströmung enthaltener Flüssigkeit unter dem Einfluss der in der Spiralströmung herrschenden Zentrifugalkraft radial nach außen geschleudert wird und dort abgetrennt wird.

Mit WO 2014 180 861 A1 ist eine Vorrichtung und Verfahren zum Abscheiden von Fremdpartikel aus einem Gasstrom bekannt geworden, welche mittels einer Venturi-Einschnürung und einem Drallerzeuger in einer Rohrleitung entlang eines Verdrängungskörpers eine Waschflüssigkeit mit hohen Scherkräften im Gasstrom verteilen um anschließend die durch fein verteilten Tröpfchen "eingefangenen" Fremdpartikel über die entstandenen Fliehkräfte abzuscheiden.

Mit WO 2014 / 147 089 A1 ist ein Verfahren zur Verarbeitung von Biomasse in einer Anlage bekannt geworden, in dem die Biomasse in einem Trockner getrocknet und die Abluft des Trockners in einem Kamin an die Umgebung abgegeben wird. Dabei wird zumindest ein Teilstrom der Feuchtigkeit enthaltenden Abluft zwischen dem Trockner und dem Kamin in einem Sprühturm mit Wasser besprüht und durch die einhergehende Abkühlung der Abluft diese Feuchtigkeit in dem Sprühturm zu Kondensat kondensiert. Bei Bedarf wird die Abluft noch in einem Naßelektrofilter oder über einen RTO gereinigt. In derartigen Verfahren oder Vorrichtungen wird die Waschflüssigkeit, in der Regel Wasser, im Kreis geführt und in Teilen auch dazu benutzt um im Gasstrom gelöste Stoffe abzuscheiden. Dies ist aber nur so lange möglich, solange diese Stoffe in der Reinigungsflüssigkeit nicht aufgesättigt sind. In der Regel wird der durch Verdunstung entstehende Verlust an Reinigungsflüssigkeit im Pufferbehälter nachgefüllt, wenn dieser einen zu geringen Pegelstand erreicht hat. Dabei wird aber das frisch aufgefüllte Wasser in seiner Reinigungsqualität sofort wieder inaktiviert, da es nur dazu dient den Sättigungsgrad in der Reinigungsflüssigkeit zu verringern.

Auch WO 2009 140 993 A1 oder WO 2016 133 647 A1 zeigen Verfahren und Vorrichtungen zur Reinigung von kontaminierten Gasströmen nach dem Stand der Technik.

Der Erfindung liegt demnach die Aufgabe zugrunde eine Vorrichtung und ein Verfahren zur Reinigung eines Gasstromes zu schaffen, die einen höheren Wirkungsgrad aufweisen und gleichzeitig weniger Frischwasser benötigen.

Insbesondere soll es nun möglich sein im Gasstrom enthaltene Stoffe, wie beispielsweise TOC (=total organic carbon), VOC (volatile organic carbon) oder Formaldehyd (HCOH), aus dem Gasstrom mittels eines einfachen Verfahrens und Aufbaus abzuscheiden. Im Sinne der Erfindung dient bevorzugt frisches Wasser als Reinigungsflüssigkeit für das Abgas, es kann aber auch speziell angerichtetes oder behandeltes Wasser als Reinigungsflüssigkeit Verwendung finden. Auch die Verwendung einer speziellen Reinigungsflüssigkeit, bevorzugt angepasst auf die in den Abgasen enthaltenen Schadstoffen, kann vorgesehen sein. Dabei ist den den meisten Reinigungsflüssigkeiten gemein, dass sie bei einer wiederkehrenden Verwendung die Schadstoffe zwar aus dem Gasstrom aufnehmen, aber dabei mit diesen angereichert werden und durch die Aufkonzentration in ihrer Reinigungswirkung schwächer werden.

Die Lösung der Aufgabe für die Vorrichtung zur Reinigung eines Gasstromes, umfasst:
- eine Rohrleitung zur Führung eines zu behandelnden Gasstromes mit einer Strömungsrichtung;
- einen in der Rohrleitung angeordneten Gleichstromabscheider mit Einspritzdüsen zur Eindüsung einer Waschflüssigkeit, Drallerzeuger zur Erzeugung einer Rotation des Gasstromes, einem Wasserabzug zur Abscheidung von kontaminierter Flüssigkeit aus dem Gasstrom und einem Tauchrohr zur Ausleitung von Reingas;
- einen Pufferbehälter für die kontaminierte Flüssigkeit;
- einen Sprühwäscher in der Rohrleitung stromaufwärts zum Gleichstromabscheider mit Einspritzdüsen, einem in Strömungsrichtung nachgeschalteten Wasserabzug und einem zugehörigen Pufferbehälter für die kontaminierte Flüssigkeit;
- die Einspritzdüsen des Gleichstromabscheiders mit einer Quelle für eine (unkontaminierte) Waschflüssigkeit und
- die Einspritzdüsen des Sprühwäschers mit dem Pufferbehälter für die kontaminierte Flüssigkeit aus dem Gleichstromabscheider wirkverbunden sind.

Insbesondere kann in einer Erweiterung der Erfindung und damit auch im Zusammenhang einer Erweiterung der Reinigungsleistung vorgesehen sein, dass zumindest ein weiterer Sprühwäscher stromaufwärts zum ersten Sprühwäscher angeordnet ist, wobei bevorzugt die kontaminierte Flüssigkeit aus dem in Strömungsrichtung stromabwärts liegenden Sprühwäscher für die Einspritzdüsen des stromaufwärts liegenden Sprühwäschers verwendet wird.

In einer besonders bevorzugten Ausführungsform nutzen die Sprühwäscher bereits zumindest eine einmal im Gasstrom verwendete Waschflüssigkeit. Es ist dabei vorgesehen, dass diese somit kontaminierte Flüssigkeit kaskadierend, also in Stufen entgegen der Strömungsrichtung verwendet wird.

Eine Lehre der Erfindung ist, dass der Gasstrom zuerst mit einer bereits kontaminierten Flüssigkeit beaufschlagt wird. Durch den hohen Konzentrationsunterschied der auszureinigenden Stoffe, die Abgase sind noch hoch belastet, zwischen dem Gasstrom und der kontaminierten Flüssigkeit, gelingt es auch mit der kontaminierten Flüssigkeit einen ersten Reinigungseffekt zu erzielen. Nach der ersten Teilreinigung wird entweder direkt mit dem Gaswäscher möglichst gering kontaminierte oder bevorzugt eine frische respektive reine Waschflüssigkeit verwendet. Auch hier findet sich wieder eine hohe Differenz zwischen den Konzentrationen (Abgase / Waschflüssigkeit), so dass die Schadstoffe aus dem Gasstrom gereinigt werden können.

In einer weiteren bevorzugten Ausführungsform werden mehrere Sprühreiniger, vorzugsweise zwei bis acht, bevorzugt zwei bis sechs und besonders bevorzugt zwei bis vier Spühwäscher vor den Gleichstromwäscher geschaltet.

In einer weiteren unabhängigen Ausführungsform kann die kontaminierte Flüssigkeit aber auch über einen zentralen Pufferbehälter für die Sprühwäscher im Kreis gefahren werden.

Wird die kontaminierte Flüssigkeit kaskadierend über mehrere oder direkt über den einen Pufferbehälter gefahren, so kann hier eine Schadstoff-Senke vorgesehen sein.

Alternativ oder kummulativ zu diesem Merkmal kann aber der Überlauf des Pufferbehälters oder bei einer kaskadierenden Anordnung einer, bevorzugt der "letzte", Pufferbehälter mit einem Quenchbereich verbunden sein und diesen mit kontaminiertem Wasser versorgen. Besonders bevorzugt wird der Quenchbereich eine eigene Abscheidung aufweisen und die kontaminierte Flüssigkeit im Kreis fahren.

In einer besonderen Ausführungsform kann in Verbindung mit einem Kreislauf für einen Quenchbereich, der üblicherweise einen viel höheren Volumenstrom aufweist, als der Gleichstromabscheider mit dem zumindest einen Sprühwäscher, zwischen diesen beiden Vorrichtungsbereichen (Quenchbereich - Gleichstromabscheider/Sprühwäscher) eine Regenerator als Schadstoff Senke, bevorzugt eine VOC-Senke, vorgesehen sein. Diese kann beispielsweise eine Abwasseraufbereitungsanlage, ein Desorber, eine Eindampfanlage, ein Ozongenerator sein. Alternativ oder in Kombination kann eine Teilstromausschleusung vorgesehen sein und die kontaminierte Flüssigkeit in Teilen der die Abgase produzierenden Anlage benutzt werden. Bei einer Anlage zur Herstellung von Werkstoffplatten könnte die Flüssigkeit beispielsweise zu Besprühung einer Pressgutmatte (Auffeuchtung) vor der Presse oder als Lösemittel zum Versprühen von Leim verwendet werden.

Bevorzugt kann in einzelnen Teilen der Vorrichtung, beispielsweise im Gleichstromabscheider und/oder in den Sprühwäschern ein Verdrängungskörper und/oder eine Venturi-Einschnürung, bevorzugt im Bereich des Verdrängungskörpers, in der Rohrleitung angeordnet sein.

Alternativ oder kumulativ ist zumindest in einem der Sprühwäscher ein Fliehkraft-, Trägheits-, Drall-, Lamellen- und/oder ein Labyrinthabscheider angeordnet. Die Flüssigkeitsabscheidung könnte aber unter Umständen in der Vorrichtung alleine durch den Gleichstromabscheider gewährleistet werden, bevorzugt wenn nur ein Pufferbehälter verwendet werden soll. Bei einer kaskadierenden Anordnung und dem Bestreben eine kaskadierende Verwendung von unterschiedlich kontaminierten Flüssigkeiten sicherzustellen, wird bevorzugt in jedem der Sprühwäscher ein eigener Abscheider vorgesehen sein.

In einer weiteren bevorzugten Ausführungsform wird ein Sprühwäscher, bevorzugt der am weitesten stromaufwärts gelegene, mit
- einem Absetzbecken,
- mit einer Teilstromausschleusung und/oder
- mit einem Regenerator als Schadstoff- respektive TOC/VOC-Senke für die, bevorzugt am stärksten, kontaminierte Flüssigkeit aus den Sprühwäschern, wirkverbunden sein.

In vorteilhafter Weise könnten im Gleichstromwäscher zur Auflösung der Waschflüssigkeit Einspritzdüsen mit einer höheren Auflösung angeordnet sein als in den Sprühwäschern für die kontaminierte Flüssigkeit. Dies beruht auf der Erkenntnis, dass für eine saubere oder nur minimal verunreinigte und/oder speziell auf die Abgase abgestimmte Waschflüssigkeit Hochleistungsdüsen Verwendung finden können, die die Flüssigkeit möglichst fein verstäuben. Idealerweise wäre eine Zerstäubung auf nahezu molekularer Basis wünschenswert.

Bevorzugt ist stromaufwärts zu den Sprühwäschern ein Quenchbereich zur Abkühlung des Abgases angeordnet. Dabei wird die Flüssigkeit auch zur Reinhaltung der Quenchleitung verwendet.

In diesem Quenchbereich findet unter Umständen auch bereits eine Vorreinigung dergestalt statt, dass mit Flüssigkeit waschbare und in einem Absetzbecken absetzbare Fremdstoffe, in diesem Quenchbereich herauswaschbar sind. Der Quenchbereich kann dabei im Gleichstrom aber auch im Gegenstrom arbeiten, sofern die nachgeordneten Sprühwäscher vor dem Gleichstromwäscher der Rohrleitung im Gleichstrom arbeiten.

In einer besonders bevorzugten Ausführungsform, wird die am höchsten, kontaminierte Flüssigkeit aus dem Sprühwäscher über Quenchdüsen im Quenchbereich in eine Quenchleitung eingedüst , wobei bevorzugt die kontaminierte Flüssigkeit K‴ über eine Wasserfalle am Ende des Quenchbereiches abgeschieden und über das Absetzbecken im Kreis geführt wird.

Alternativ oder in Kombination mit den obigen Merkmalen ist zumindest eine Ausgleichsleitung, mit einer, bevorzugt bedarfsweise, aktivierbaren Wirkverbindung zum Absetzbecken am Wasserabzug und/oder an einem Pufferbehälter angeordnet.

Die Lösung für das Verfahren zur Reinigung eines Gasstromes umfasst die folgenden Verfahrensschritte:
- Einleitung eines zu behandelnden Gasstromes mit einer Strömungsrichtung in eine Rohrleitung mit einem Gleichstromabscheider;
- Eindüsung einer unkontaminierten Waschflüssigkeit in den Gleichstromabscheider, Erzeugung einer Rotation des Gasstromes mit einem Drallerzeuger, Abscheidung von kontaminierter Flüssigkeit K aus dem Gasstrom über einen Wasserabzug und Ausleitung des Reingases über ein Tauchrohr;
- Zwischenspeicherung der kontaminierten Flüssigkeit in einem Pufferbehälter;
- Eindüsung der kontaminierten Flüssigkeit K mit Einspritzdüsen in einem Sprühwäscher in der Rohrleitung stromaufwärts zum Gleichstromabscheider, Abscheidung der kontaminierten Flüssigkeit in einem in Strömungsrichtung nachgeschalteten Wasserabzug und Zwischenspeicherung in einem zugehörigen Pufferbehälter für die kontaminierte Flüssigkeit.

Bevorzugt wird zumindest ein weiterer Sprühwäscher stromaufwärts zum ersten Sprühwäscher verwendet, wobei die kontaminierte Flüssigkeit aus dem in Strömungsrichtung stromabwärts liegenden Sprühwäscher für die Einspritzdüsen des stromaufwärts liegenden Sprühwäschers verwendet wird.

Alternativ oder kumulativ wird stromaufwärts zu den Sprühwäschern das Abgas in einem Quenchbereich, bevorzugt unter Verwendung der kontaminierten Flüssigkeit, höchst bevorzugt aus dem Absetzbecken, abgekühlt.

Alternativ oder kumulativ wird die Flüssigkeit aus einem Sprühwäscher, bevorzugt aus dem am weitesten stromaufwärts gelegenen, in ein Absetzbecken, eine Teilstromausschleusung und/oder in einen Regenerator als Schadstoff- respektive VOC-Senke eingeleitet.

Alternativ oder kumulativ werden im Gleichstromwäscher zur Auflösung der Waschflüssigkeit Einspritzdüsen mit einer höheren Auflösung verwendet werden als in den Sprühwäschern für die kontaminierte Flüssigkeit.

Alternativ oder kumulativ wird die kontaminierte Flüssigkeit über Quenchdüsen im Quenchbereich zur Abkühlung des Abgases in eine Quenchleitung eingedüst, wobei bevorzugt die kontaminierte Flüssigkeit über eine Wasserfalle am Ende des Quenchbereiches abgeschieden und über ein Absetzbecken im Kreis geführt wird.

In vorteilhafter Weise werden der höhere Wirkungsgrad und der geringere Frischwasserverbrauch gegenüber dem Stand der Technik durch die Kombination obiger Merkmale erreicht.

Die Lehre der Erfindung zeigt insbesondere die nachstehenden Vorteile:
Bereits belastetes Kreislaufwasser kann über verstopfungsunempfindliche Düsen zur Erstreinigung und/oder Kühlung der Abgase verwendet werden. Die noch frische und reine Waschflüssigkeit kann mit Düsen versprüht werden, die dafür geeignet sind die Tropfen so klein wie möglich aufzulösen. Diese sind aber in der Regel anfällig für kontaminierte Flüssigkeit und werden in der Lehre des Standes der Technik bei Kreisläufen mit kontaminierten Flüssigkeiten nicht als geeignet angesehen.

In der Vorrichtung können besonders effektiv und vorteilhaft wasserlösliche gasförmige Bestandteile an der Oberfläche der Tropfen absorbiert werden. Die Waschleistung korreliert dabei mit der spezifischen Oberfläche der Tropfen und ist damit dem Durchmesser der Tropfen umgekehrt proportional. Die nach der Wäsche beladenen Tropfen der Waschflüssigkeit werden aufgrund ihrer Massenträgheit durch die integrierte axiale Gleichstrom-Drallabscheidung in dem nachgeschalteten Tropfenabscheider aus dem Gasstrom abgeschieden.

Der Grundgedanke besteht im Wesentlichen darin, alle notwendigen Funktionen zum effizienten Abscheiden von Fremdpartikeln aus einem Gasstrom in einem einzigen Apparat durchführen zu können. Dieser Apparat zeichnet sich durch geringen baulichen Aufwand und Einsetzbarkeit in bestehende Rohrsysteme aus und lässt sich besonders effektiv hinter eine bereits vorhandenen Quenchvorrichtung etablieren.

Es ist offensichtlich, dass trotz einer optimalen Darstellung der endlosen Anzahl (n+1) der Sprühwäscher diese nicht limitiert sind, sondern je nach Notwendigkeit oder Anzahl eine Vielzahl davon sein können. Alternativ oder kumulativ wäre es möglich das zu reinigende Abgas nach dem Quenchbereich in mehrere Rohrleitungen aufzuteilen um die Reinigungskapazität zu erhöhen. Auch ist es denkbar, dass die erfindungsgemäße Anordnung mehrmals hintereinander in gleicher oder alternativer Ausführungsform (Sprühwäscher/Gleichstromabscheider) angeordnet werden kann um die in den nächsten Jahren wahrscheinlichen höheren Anforderungen der Reinigungstechnik erfüllen zu können.

Zusammenfassend sei auf die Vorteile der Erfindung hingewiesen:
- Die Reinigungswirkung wird durch die direkt eingesprühte nicht oder nur gering kontaminierte Waschflüssigkeit verbessert.
- Durch die direkte Verwendung nicht oder nur gering kontaminierter Waschflüssigkeit können hoch auflösende Einspritzdüsen verwendet werden.
- Bei Verwendung einer Vorwäsche zur Abscheidung von Feststoffen und/oder Abkühlung des Abgases kann sich die erfindungsgemäße Vorrichtung auf die Reinigung der im Abgas gelösten Schadstoffe konzentrieren.
- Durch die Trennung von Vorwäsche (bevorzugt Quenche) und Hauptwäsche (Sprühwäscher mit Gleichstromabscheider) lassen sich zumindest zwei voneinander getrennte Flüssigkeitssysteme (Stoffströme) etablieren die getrennt voneinander verwendbar und somit einfacher regelbar sind.
- Für die gelösten Schadstoffe im Abgas wird eine konzentrierte Reinigung mittels hochwirksamer Waschflüssigkeit bei gleichzeitig geringem Stoffstrom in der Hauptwäsche ermöglicht.
- Die Reinigungswirkung kann bei einer kaskadierenden Anordnung der kontaminierten Flüssigkeit in der Hauptwäsche reziprok zum Verschmutzungsgrad des Gasstromes nahezu konstant gehalten werden (am stärksten kontaminierte Flüssigkeit kommt in Kontakt mit dem am stärksten verunreinigten Gasstrom).
- Durch den relativ geringen Stoffstrom der kontaminierten Flüssigkeit in der Hauptwäsche und der bevorzugter Aufkonzentrierung der Schadstoffe darin kann ein ggfs. vorgesehener Regenerator kleiner ausgelegt werden oder eine höhere Reinigungswirkung erzielen.

Die Vorrichtung ist zur Durchführung des Verfahrens geeignet, kann aber auch eigenständig betrieben werden.

Die Erfindung ist anhand mehrere Ausführungsbeispiele in der Zeichnung näher erläutert.

Es zeigen:
- Figur 1: zeigt einen Gleichstromwäscher mit einem Kreislauf für die kontaminierte Flüssigkeit nach dem Stand der Technik und
- Figur 2: zeigt in einem erfindungsgemäßen Ausführungsbeispiel die Erfindung in Verbindung mit einer Vielzahl an weiteren optionalen Merkmalen.

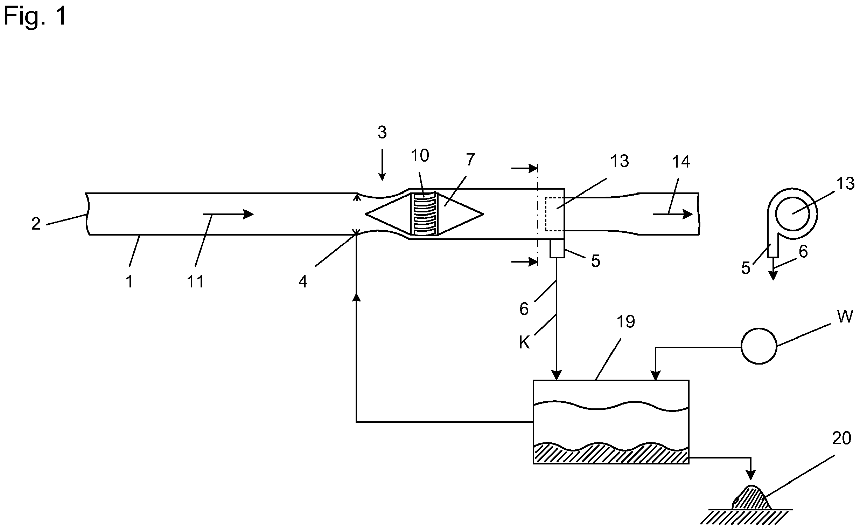

Der in Figur 1 dargestellte Gleichstromwäscher nach dem Stand der Technik wirkt wie folgt: Das Abgas 12 durchströmt in Strömungsrichtung 11 die Rohrleitung 1 des Gleichstromwäschers und wird mittels der Einspritzdüsen 4 mit einer Flüssigkeit besprüht. Um den Reinigungseffekt zu erhöhen wird anschließend die Rohrleitung analog zu einer Venturi-Einschnürung 3 verengt. Anschließend findet sich stromabwärts ein Verdrängungskörper 7, welcher einen Drallerzeuger 10 aufweist. Die somit in Rotation versetzte Gasströmung wird die Anteile mit einer höheren Dichte (Flüssigkeit, Fremdstoffe) in Richtung der Innenwände der Rohrleitung 1 verschieben. Dies ermöglicht es stromabwärts am Ende der Rohrleitung ein Tauchrohr 13 koaxial anzuordnen, das einen kleineren Durchmesser als die Rohrleitung 1 aufweist. Somit gelangt das gereinigte Reingas 14 durch das Tauchrohr 13 in die weiterführenden Rohrleitungen wohingegen die Bestandteile des Abgases, die Fremdstoffe 20, in der kontaminierten Flüssigkeit K über einen Wasserabzug 5 und eine Abzugsleitung 6 abgeschieden und einem Absetzbecken 19 zugeführt werden. Im Absetzbecken können die schweren Fremdstoffe 20 am Boden mittels entsprechender Einrichtungen ausgeschieden und entsorgt werden. Die Flüssigkeit K wird anschließend im Kreislauf wiederverwendet und nochmal dem Gleichstromabscheider zugeführt. Durch die kontaminierte Flüssigkeit K müssen Einspritzdüsen 4 verwendet werden, die nicht so leicht verstopfen und somit keine hohe Auflösung bieten können. In der Natur der Sache liegt es, dass ein Teil der eingesprühten Waschflüssigkeit verdunstet und mit dem Reingas aus dem Kreislauf der Flüssigkeit entnommen wird. Um dies auszugleichen, wird normalerweise das Absetzbecken mit frischem Wasser oder der entsprechenden Waschflüssigkeit W auf einen vorgegeben Füllstand gehalten. Es liegt in der Natur der Sache, dass durch den Kreislauf sich volatile Stoffe in der kontaminierten Flüssigkeit anlagern. Ein Reinigungseffekt kann nach dieser Aufdosierung an Schadstoffen durch die Flüssigkeit im Kreislauf nicht mehr erfolgen. Der gesamte Kreislauf muss in diesem Falle umständlich entleert und mit frischer Waschflüssigkeit W versorgt werden.

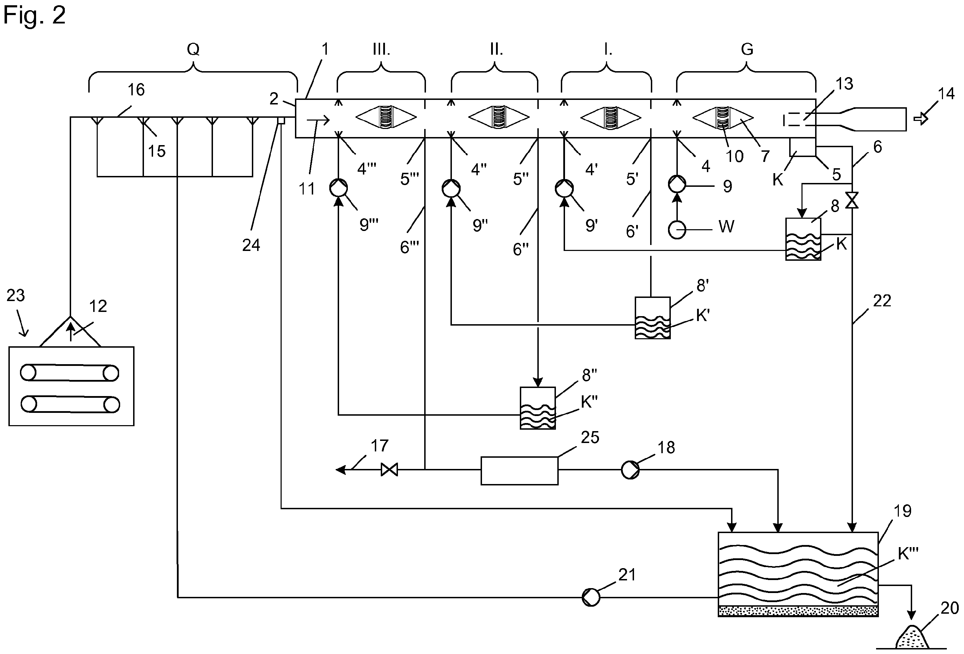

In Figur 2 ist die erfindungsgemäße Vorrichtung dargestellt, die das Abgas 12 eines Abgaserzeugers 23, hier beispielhaft eine kontinuierlich arbeitende Presse zur Herstellung von Werkstoffplatten, von Schadstoffen reinigen soll.

In einem optionalen Quenchbereich Q, einer Vorreinigungsstufe, wird das Abgas 12 in einer Quenchleitung 16 mittels Quenchdüsen 15 mit einer Flüssigkeit besprüht und abgekühlt. Die Flüssigkeit wird anschließend über eine Wasserfalle 24 abgezogen und bevorzugt in einem Absetzbecken 19 nach dem Prinzip eines Dichteabscheiders von Fremdstoffen 20 (Staub, Flusen, Verschmutzungen, ...) getrennt. Schematisch ist nur eine Schwerabtrennung dargestellt, es ist offensichtlich, dass auch eine sich oberhalb der Flüssigkeit absetzende Fraktion abgezogen werden könnte. Üblicherweise wird für einen Quenchbereich Q ein großer Volumenstrom an Flüssigkeit benötigt um dem Abgas 12 die Wärme zu entziehen.

In der Vorrichtung wird ähnlich wie nach der vorhergehenden Figur das Abgas 12 in eine Rohrleitung 1 mit einer vorgegebenen Strömungsrichtung 11 eingegeben.

Um die bespielhafte Kaskadierung sinnvoller darstellen zu können, wird die Erläuterung nicht in Strömungsrichtung 11 sondern entgegengesetzt am Ende der Rohrleitung 1, beim Gleichstromabscheider G begonnen Der Gleichstromabscheider G ist im vorliegenden Ausführungsbeispiel zumindest mit einem Drallerzeuger 10, einem optionalen Verdrängerkörper 7, stromaufwärts mit Einspritzdüsen 4 und stromabwärts mit einem koaxialen Tauchrohr 13 ausgestattet. Im Bereich des Tauchrohres 13 findet sich ein Wasserabzug 5 mit einer daran angeschlossenen Abzugsleitung 6, welcher die kontaminierte Flüssigkeit K in einen Pufferbehälter 8 überführt. Die Besonderheit des Gleichstromabscheiders G besteht darin, dass zumindest eine Einspritzdüse 4 mit einer Quelle für eine nicht oder nur gering kontaminierte Waschflüssigkeit W verbunden ist. Somit gelangt in den Gleichstromabscheider G immer eine Waschflüssigkeit W mit höchstmöglicher Reinigungswirkung.

In einer nicht dargestellten Alternative kann auch eine kontaminierte

Waschflüssigkeit K alternativ oder unterstützend zur Waschflüssigkeit W verwendet werden, wenn diese vorher eine Reinigungsvorrichtung durchläuft und nur noch gering oder wenig kontaminiert oder im einer Waschflüssigkeit W gestreckt über die Einspritzdüsen 4 verdüst wird.

Optional kann die Waschflüssigkeit W gekühlt werden, da eine kühle Waschflüssigkeit eine höhere Affinität zur Lösung von Schadstoffen aufweist als eine warme Waschflüssigkeit W. Vorteilhafterweise wird eine kühle Waschflüssigkeit unterhalb der Raumtemperatur, bevorzugt unter 15°, besonders bevorzugt unter 8° , verwendet.

Im schematischen Beispiel wird nun die kontaminierte Flüssigkeit K aus dem Pufferbehälter 8 an einen Sprühwäscher I übergeben, der stromaufwärts gegenüber dem Gleichstromabscheider G angeordnet ist. Der Sprühwäscher I, der alternativ auch als Gleichstromabscheider (optionale Verdrängerkörper, Drallerzeuger...) ausgeführt sein kann, düst die kontaminierte Flüssigkeit mit Einspritzdüsen 4' in die Rohrleitung 1 ein und wird diese bevorzugt stromabwärts, noch vor dem Gleichstromabscheider G, mittels einem Wasserabzug 5' aus dem Gasstrom abscheiden. In einem nicht dargestellten Ausführungsbeispiel könnte aber auch der Wasserabzug 5 des Gleichstromabscheiders G diese Aufgabe übernehmen.

Die kontaminierte Flüssigkeit K' gelangt nach dem Wasserabzug 5' über eine Abzugsleitung 6' in einem Pufferbehälter 8'. In einer einfachen Kaskade wäre diese Anordnung ausreichend. Aus dem ersten Pufferbehälter 8' könnte die kontaminierte Flüssigkeit K' direkt einem Kreislauf für einen Quenchbereich Q übergeben werden, oder bevorzugt nochmals in dem Sprühwäscher I und/oder dem Gleichstromabscheider G verwendet werden.

Die Sprühwäscher II und III sind analog und kaskadierend zum Gleichstromabscheider G und Sprühwäscher I aufgebaut und wirkverbunden. Die kontaminierte Flüssigkeit K` aus dem zweiten Pufferbehälter 8' wird im zweiten Sprühwäscher II durch die Sprühwasserpumpe 9" und die zugehörigen Einspritzdüsen 4" in den Gasstrom stromaufwärts zum Sprühwäscher I eingesprüht und mittels eines Wasserabzuges 5" aus dem Gasstrom noch vor dem Sprühwäscher I wieder abgeschieden. Der Wasserabzug 5" übergibt die kontaminierte Flüssigkeit K" an die Abzugsleitung 6" und diese an den Pufferbehälter 8". Die Flüssigkeit K" wird wiederum dem Sprühwäscher III kaskadierend zugeführt, so dass die Flüssigkeit stromaufwärts zum Sprühwäscher II in den Gasstrom über die Einspritzdüsen 4‴ in den Gasstrom eingedüst und mittels dem stromabwärts vor dem Sprühwäscher II angeordneten Wasserabzug 5‴ wieder aus dem Gasstrom abgesondert wird. Ist das Ende der Kaskade erreicht übergibt der Wasserabzug 5‴ die kontaminierte Flüssigkeit K‴, welche durch die Kaskade aufkonzentriert ist, entweder einem nicht dargestellten weiteren Pufferbehälter oder einer entsprechenden Entsorgungseinheit. Bevorzugt wird das kontaminierte Wasser in einem Absetzbecken 19 als Dichteabscheider von Fremdstoffen 20 separiert. Die Flüssigkeit K‴ kann dann beispielsweise einer Reinigung zugeführt werden.

In einem erweiterten Ausführungsbespiel nach Figur 2 ist aber der oben beschriebenen Vorrichtung noch ein Quenchbereich Q vorgeschaltet. In diesem erweiterten Ausführungsbeispiel, in dem der Quenchbereich Q der Vorrichtung zur Reinigung eines Gasstromes zugerechnet werden kann, wird nun die aufkonzentrierte kontaminierte Flüssigkeit K‴ dazu benutzt um in der Quenchleitung 16 das Abgas vor Eintritt in die Rohrleitung 1 abzukühlen und Fremdstoffe (bevorzugt Feststoffe, aber auch teilweise volatile Stoffe) bereits vor dem Eintritt in die Rohrleitung 1 abzuscheiden. Der Stoffstrom, der im Kreislauf durch den Quenchbereich geführt wird ist deutlich größer als durch den kaskadierenden Sprühwäscher I, II, III mit Gleichstromabscheider G.

In eigenen und voneinander getrennten Ausführungsbeispielen wird vor der Übergabe der kontaminierten Flüssigkeit K‴ an das Absetzbecken 19 respektive den Quenchkreislauf die kontaminierte Flüssigkeit K‴ zumindest teilweise über eine Teilstromausschleusung 17 und/oder einen Regenerator 25 als Schadstoff- respektive TOC/VOC-Senke für die Flüssigkeit K', K", K"', ..., bevorzugt mit der am stärksten kontaminierten Flüssigkeit K‴ geführt. Dies hat insbesondere den Vorteil, dass nur ein relativ geringer Volumenstrom gereinigt werden muss, im Gegensatz zum Volumenstrom des Quenchkreislaufes. Natürlich kann auch in diesem Quenchkreislauf eine Desorber für Schadstoffe (TOC/VOC) vorgesehen sein, aber dieser wird in der Regel nur eine Leistung für einen Teilvolumenstrom des Quenchkreislaufes haben.

Vor den Einspritzdüsen 4, 4', 4", 4‴ sind Sprühwasserpumpen 9, 9', 9", 9‴, die entsprechend der Notwendigkeiten in der Vorrichtung platziert sind. Der Quenchkreislauf wird von einer Pumpe 21 betrieben.

In vorteilhafter Weise kann eine Ausgleichsleitung 22 vorgesehen sein, die vom Wasserabzug 5 des Gleichstromabscheiders G einen Überlauf zum Absetzbecken 19 darstellt. Gleiches kann auch von den Sprühwäschern I, II, III oder von den Pufferbehältern 8, 8', 8" vorgesehen sein. (1523)

### Bezugszeichenliste: P1523

- 1: Rohrleitung
- 2: Einlassöffnung
- 3: Venturi-Einschnürung
- 4: Einspritzdüse (4', 4", 4‴)
- 5: Wasserabzug (5', 5", 5‴)
- 6: Abzugsleitung (6', 6", 6‴)
- 7: Verdrängungskörper
- 8: Pufferbehälter (8`, 8", )
- 9: Sprühwasserpumpe (9', 9", 9‴)
- 10: Drallerzeuger
- 11: Strömungsrichtung
- 12: Abgas
- 13: Tauchrohr
- 14: Reingas
- 15: Quenchdüsen
- 16: Quenchleitung
- 17: Teilstromausschleusung
- 18: Pumpe
- 19: Absetzbecken
- 20: Fremdstoffe
- 21: Pumpe
- 22: Ausgleichsleitung
- 23: Abgaserzeuger
- 24: Wasserfalle
- 25: Regenerator
- G: Gleichstromabscheider
- I.: Sprühwäscher
- II.: Sprühwäscher
- III.: Sprühwäscher
- Q: Quenchbereich
- K: Flüssigkeit (kontaminiert)
- W: Waschflüssigkeit

## Patentansprüche

1. Vorrichtung zur Reinigung eines Gasstromes, umfassend:
- eine Rohrleitung (1) zur Führung eines zu behandelnden Gasstromes mit einer Strömungsrichtung (11);
- einen in der Rohrleitung (1) angeordneten Gleichstromabscheider (G) mit Einspritzdüsen (4) zur Eindüsung einer unkontaminierten Waschflüssigkeit (W), mit einem Drallerzeuger (10) zur Erzeugung einer Rotation des Gasstromes, einem Wasserabzug (5) zur Abscheidung von kontaminierter Flüssigkeit (K) aus dem Gasstrom und einem Tauchrohr (13) zur Ausleitung von Reingas (14);
- einen Pufferbehälter (8) für die kontaminierte Flüssigkeit (K);
- einen Sprühwäscher (I) in der Rohrleitung (1) stromaufwärts zum Gleichstromabscheider (G) mit Einspritzdüsen (4'), einem in Strömungsrichtung (11) nachgeschalteten Wasserabzug (5') und einem zugehörigen Pufferbehälter (8') für die kontaminierte Flüssigkeit (K') aus dem Wasserabzug (5'); wobei
- die Einspritzdüsen (4) des Gleichstromabscheiders (G) mit einer Quelle für unkontaminierte Waschflüssigkeit (W) und
- die Einspritzdüsen (4') des Sprühwäschers (I) mit dem Pufferbehälter (8) für die kontaminierte Flüssigkeit (K) aus dem Gleichstromabscheider (G) wirkverbunden sind.

2. Vorrichtung nach Anspruch 1, **dadurch gekennzeichnet, dass** zumindest ein weiterer Sprühwäscher (II, III, ...) stromaufwärts zum ersten Sprühwäscher (I) angeordnet ist, wobei die kontaminierte Flüssigkeit (K', K", ...) aus dem in Strömungsrichtung stromabwärts liegenden Sprühwäscher (I, II) für die Einspritzdüsen des stromaufwärts liegenden Sprühwäschers (II, III) verwendet wird.

3. Vorrichtung nach einem der Ansprüche 1 oder 2, **dadurch gekennzeichnet, dass** im Gleichstromabscheider (G) und/oder in den Sprühwäschern (I, II, III, ...) ein Verdrängungskörper (7) und/oder eine Venturi-Einschnürung (3), bevorzugt im Bereich des Verdrängungskörpers (7), in der Rohrleitung (1) angeordnet ist.

4. Vorrichtung nach einem der Ansprüche 1 bis 3, **dadurch gekennzeichnet, dass** in den Sprühwäschern (I, II, III, ...) Fliehkraft-, Trägheits-, Drall-, Lamellen- und/oder Labyrinthabscheider angeordnet sind.

5. Vorrichtung nach einem der Ansprüche 1 bis 4, **dadurch gekennzeichnet, dass** stromaufwärts zu den Sprühwäschern (I, II, III, ...) ein Quenchbereich (Q) zur Abkühlung des Abgases (12) angeordnet ist, welcher bevorzugt.

6. Vorrichtung nach einem der Ansprüche 1 bis 5, **dadurch gekennzeichnet, dass** ein Sprühwäscher (I, II, III, ...), bevorzugt der am weitesten stromaufwärts gelegene,
- mit einem Absetzbecken (19),
- mit einer Teilstromausschleusung (17) und/oder
- einem Regenerator (25) als Schadstoff- respektive VOC-Senke für die Flüssigkeit (K', K", K‴ ...), bevorzugt mit der am stärksten kontaminierten Flüssigkeit (K‴) wirkverbunden ist.

7. Vorrichtung nach einem der Ansprüche 1 bis 6, **dadurch gekennzeichnet, dass** im Gleichstromwäscher (G) zur Auflösung der Waschflüssigkeit (W) Einspritzdüsen (4) mit einer höheren Auflösung angeordnet sind als die Einspritzdüsen (4', 4", 4‴) in den Sprühwäschern (I, II, III, ...) für die kontaminierte Flüssigkeit (K, K', K").

8. Vorrichtung nach einem der Ansprüche 5 bis 7, **dadurch gekennzeichnet**, das die kontaminierte Flüssigkeit über Quenchdüsen (15) im Quenchbereich (Q) in eine Quenchleitung (16) eingedüst werden, wobei bevorzugt die kontaminierte Flüssigkeit über eine Wasserfalle (24) am Ende des Quenchbereiches (Q) abgeschieden und über ein Absetzbecken (19) im Kreis geführt wird.

9. Vorrichtung nach einem der Ansprüche 1 bis 8, **dadurch gekennzeichnet, dass** zumindest eine Ausgleichsleitung (22) mit einer, bevorzugt bedarfsweise, aktivierbare Wirkverbindung zum Absetzbecken (19) am Wasserabzug (5, 5', 5") und/oder an einem Pufferbehälter (8, 8`, 8") angeordnet ist.

10. Verfahren zur Reinigung eines Gasstromes, umfasst:
- die Einleitung eines zu behandelnden Gasstromes mit einer Strömungsrichtung (11) in eine Rohrleitung (1) mit einem Gleichstromabscheider (G);
- die Eindüsung einer unkontaminierten Waschflüssigkeit (W) in den Gleichstromabscheider (G), Erzeugung einer Rotation des Gasstromes mit einem Drallerzeuger (10), Abscheidung von kontaminierter Flüssigkeit (K) aus dem Gasstrom über einen Wasserabzug (5) und Ausleitung des Reingases (14) über ein Tauchrohr (13);
- die Zwischenspeicherung der kontaminierten Flüssigkeit (K) in einem Pufferbehälter (8);
- die Eindüsung der kontaminierten Flüssigkeit (K) mit Einspritzdüsen (4') in einem Sprühwäscher (I) in der Rohrleitung (1) stromaufwärts zum Gleichstromabscheider (G), Abscheidung der kontaminierten Flüssigkeit (K') in einem in Strömungsrichtung (11) nachgeschalteten Wasserabzug (5') und
- die Zwischenspeicherung der kontaminierten Flüssigkeit (K') in einem Pufferbehälter (8').

11. Verfahren nach Anspruch 10, **dadurch gekennzeichnet, dass** zumindest ein weiterer Sprühwäscher (II, III, ...) stromaufwärts zum ersten Sprühwäscher (I) verwendet wird, wobei die kontaminierte Flüssigkeit (K', K", ...) aus dem in Strömungsrichtung stromabwärts liegenden Sprühwäscher (I, II) für die Einspritzdüsen des stromaufwärts liegenden Sprühwäschers (II, III) verwendet wird.

12. Verfahren nach Anspruch 10 oder 11, **dadurch gekennzeichnet, dass** stromaufwärts zu den Sprühwäschern (I, II, III, ...) das Abgas (12) in einem Quenchbereich (Q), bevorzugt unter Verwendung der kontaminierten Flüssigkeit (K', K", K‴), höchst bevorzugt aus dem Absetzbecken (19), abgekühlt wird.

13. Verfahren nach einem der Ansprüche 10 bis 12, **dadurch gekennzeichnet, dass** die Flüssigkeit (K', K", K‴, ...) aus einem Sprühwäscher (I, II, III, ...), bevorzugt aus dem am weitesten stromaufwärts gelegenen,
- in einen Absetzbecken (19),
- in eine Teilstromausschleusung (17) und/oder
- einen Regenerator (25) als Schadstoff- respektive VOC-Senke für die Flüssigkeit (K', K", K‴ ...), bevorzugt mit der am stärksten kontaminierten Flüssigkeit (K‴), eingeleitet wird.

14. Verfahren nach einem der Ansprüche 10 bis 13, **dadurch gekennzeichnet, dass** im Gleichstromwäscher (G) zur Auflösung der Waschflüssigkeit (W) Einspritzdüsen (4) mit einer höheren Auflösung verwendet werden als die Einspritzdüsen (4', 4", 4‴) in den Sprühwäschern (I, II, III, ...) für die kontaminierte Flüssigkeit (K, K', K")

15. Verfahren nach einem der Ansprüche 10 bis 14, **dadurch gekennzeichnet, dass** die kontaminierte Flüssigkeit (K‴) über Quenchdüsen (15) im Quenchbereich (Q) zur Abkühlung des Abgases (12) in eine Quenchleitung (16) eingedüst werden, wobei bevorzugt die kontaminierte Flüssigkeit (K‴) über eine Wasserfalle (24) am Ende des Quenchbereiches (Q) abgeschieden und über ein Absetzbecken (19) im Kreis geführt wird.

## Claims

1. Device for cleaning a gas flow, comprising:
- a pipeline (1) for guiding a gas flow to be treated with a flow direction (11);
- a co-current separator (G) arranged in the pipeline (1) with injection nozzles (4) for injecting an uncontaminated cleaning liquid (W), having a swirl generator (10) for generating a rotation of the gas flow, a water extractor (5) for separating contaminated liquid (K) from the gas flow and an immersion tube (13) for discharging clean gas (14);
- a buffer container (8) for the contaminated liquid (K);
- a spray scrubber (I) in the pipeline (1) upstream of the co-current separator (G) with injection nozzles (4'), a water extractor (5') downstream in the direction of flow (11) and an associated buffer container (8') for the contaminated liquid (K') from the water extractor (5'); wherein
- the injection nozzles (4) of the co-current separator (G) with a source of uncontaminated cleaning liquid (W) and
- the injection nozzles (4') of the spray scrubber (I) are operatively connected to the buffer container (8) for the contaminated liquid (K) from the co-current separator (G).

2. Device according to claim 1, **characterized in that** at least one further spray scrubber (II, III, ...) is arranged upstream of the first spray scrubber (I), wherein the contaminated liquid (K', K", ...) from the spray scrubber (I, II) located downstream in the flow direction is used for the injection nozzles of the spray scrubber (II, III) located upstream.

3. Device according to one of claims 1 or 2, **characterized in that** a displacement body (7) and/or a venturi constriction (3), preferably in the region of the displacement body (7), is/are arranged in the pipeline (1) in the co-current separator (G) and/or in the spray scrubbers (I, II, III, ...).

4. Device according to one of claims 1 to 3, **characterized in that** centrifugal, inertial, swirl, lamellar and/or labyrinth separators are arranged in the spray scrubbers (I, II, III, ...).

5. Device according to one of claims 1 to 4, **characterized in that** upstream of the spray scrubbers (I, II, III, ...) a quench region (Q) for cooling the exhaust gas (12) is arranged, which preferably.

6. Device according to one of claims 1 to 5, **characterized in that** a spray scrubber (I, II, III, ...), preferably the one located furthest upstream, is operatively connected to
- a settling tank (19),
- a partial flow exfiltration (17) and/or
- a regenerator (25) as a pollutant or VOC sink for the liquid (K', K", K‴ ...), preferably with the most contaminated liquid (K‴).

7. Device according to one of claims 1 to 6, **characterized in that** injection nozzles (4) with a higher resolution are arranged in the co-current scrubber (G) for dissolving the cleaning liquid (W) than the injection nozzles (4', 4", 4‴) in the spray scrubbers (I, II, III, ...) for the contaminated liquid (K, K', K").

8. Device according to one of claims 5 to 7, **characterized in that** the contaminated liquid is injected into a quench line (16) via quench nozzles (15) in the quench region (Q), wherein preferably the contaminated liquid is separated via a water trap (24) at the end of the quench region (Q) and is circulated via a settling tank (19).

9. Device according to one of claims 1 to 8, **characterized in that** at least one equalization line (22) with an operative connection to the settling tank (19), which can preferably be activated as required, is arranged on the water extractor (5, 5', 5") and/or on a buffer container (8, 8', 8").

10. Method for cleaning a gas flow, comprising:
- the introduction of a gas flow to be treated with a flow direction (11) into a pipeline (1) with a co-current separator (G);
- injecting an uncontaminated cleaning liquid (W) into the co-current separator (G), generating a rotation of the gas flow with a swirl generator (10), separating contaminated liquid (K) from the gas flow via a water extractor (5), and discharging the clean gas (14) via an immersion tube (13);
- intermediately storing the contaminated liquid (K) in a buffer container (8);
- injecting the contaminated liquid (K) by means of injection nozzles (4') in a spray scrubber (I) in the pipeline (1) upstream to the co-current separator (G), separating the contaminated liquid (K') in a water extractor (5') downstream in the flow direction (11), and
- intermediately storing the contaminated liquid (K') in a buffer container (8').

11. Method according to claim 10, **characterized in that** at least one further spray scrubber (II, III, ...) is used upstream of the first spray scrubber (I), wherein the contaminated liquid (K', K", ...) from the spray scrubber (I, II) located downstream in the flow direction is used for the injection nozzles of the spray scrubber (II, III) located upstream.

12. Method according to claim 10 or 11, **characterized in that** upstream to the spray scrubbers (I, II, III, ...) the exhaust gas (12) is cooled in a quench region (Q), preferably using the contaminated liquid (K', K", K‴), most preferably from the settling tank (19).

13. Method according to one of claims 10 to 12, **characterized in that** the liquid (K', K", K‴ ...) from a spray scrubber (I, II, III, ...), preferably from the one located most upstream, is introduced
- into a settling tank (19),
- into a partial flow exfiltration (17) and/or
- a regenerator (25) as a pollutant or VOC sink for the liquid (K', K", K‴ ...), preferably with the most contaminated liquid (K‴).

14. Method according to one of claims 10 to 13, **characterized in that** in the co-current scrubber (G) for dissolving the cleaning liquid (W) injection nozzles (4) with a higher resolution are used than the injection nozzles (4', 4", 4‴) in the spray scrubbers (I, II, III, ...) for the contaminated liquid (K, K', K").

15. Method according to one of claims 10 to 14, **characterized in that** the contaminated liquid (K"') is injected into a quench line (16) via quench nozzles (15) in the quench region (Q) for cooling the exhaust gas (12), wherein preferably the contaminated liquid (K‴) is separated via a water trap (24) at the end of the quench region (Q) and is circulated via a settling tank (19).

## Revendications

1. Dispositif pour purifier un flux de gaz, comprenant:
- une conduite (1) pour acheminer un flux de gaz à traiter dans un sens de circulation (11);
- un séparateur à flux continu (G) disposé dans la conduite (1) et muni de buses d'injection (4) pour injecter un liquide de lavage non contaminé (W), avec un générateur de tourbillons (10) pour produire une rotation du flux de gaz, avec une extraction d'eau (5) pour séparer du liquide contaminé (K) du flux de gaz et avec un tube plongeur (13) pour évacuer du gaz purifié (14);
- un réservoir tampon (8) pour le liquide contaminé (K);
- un laveur par pulvérisation (I) dans la conduite (1) en amont du séparateur à flux continu (G), muni de buses d'injection (4'), d'une extraction d'eau (5') montée en aval dans le sens de circulation (11) et d'un réservoir tampon (8') correspondant pour le liquide contaminé (K) provenant de l'extraction d'eau (5'); dans lequel
- les buses d'injection (4) du séparateur à flux continu (G) sont en liaison active avec une source de liquide de lavage non contaminé (W) et
- les buses d'injection (4') du laveur par pulvérisation (I) sont en liaison active avec le réservoir tampon (8) pour le liquide contaminé (K) provenant du séparateur à flux continu (G).

2. Dispositif selon la revendication 1, **caractérisé en ce qu'**au moins un autre laveur par pulvérisation (II, III, ...) est disposé en amont du premier laveur par pulvérisation (I), le liquide contaminé (K', K", ...) qui provient du laveur par pulvérisation (I, II) situé en aval dans le sens de circulation étant utilisé pour les buses d'injection du laveur par pulvérisation (II, III) situé en amont dans le sens de circulation.

3. Dispositif selon l'une des revendications 1 ou 2, **caractérisé en ce qu'**un élément déplaceur (7) et/ou un venturi (3), de préférence dans la région de l'élément déplaceur (7), sont disposés dans la conduite dans le séparateur à flux continu (G) et/ou dans les laveurs par pulvérisation (I, II, III, ...).

4. Dispositif selon l'une des revendications 1 à 3, **caractérisé en ce que** des séparateurs centrifuges, à inertie, à tourbillons, à lamelles et/ou à labyrinthe sont disposés dans les laveurs par pulvérisation (I, II, III, ...).

5. Dispositif selon l'une des revendications 1 à 4, **caractérisé en ce qu'**une zone d'extinction (Q) pour le refroidissement du gaz d'échappement (12) est disposée en amont des laveurs par pulvérisation (I, II, III, ...), et de préférence.

6. Dispositif selon l'une des revendications 1 à 5, **caractérisé en ce qu'**un laveur par pulvérisation (I, II, III, ...), de préférence celui qui est situé le plus loin en amont, est en liaison active
- avec un bassin de décantation (19),
- avec une sortie de flux partiel (17) et/ou
- avec un régénérateur (25) formant un puits de polluants ou de COV pour le liquide (K', K", K"', ...), de préférence avec le liquide le plus fortement contaminé (K"').

7. Dispositif selon l'une des revendications 1 à 6, **caractérisé en ce que** des buses d'injection (4) ayant une dispersion supérieure aux buses d'injection (4', 4", 4"') des laveurs par pulvérisation (I, II, III, ...) pour le liquide contaminé (K, K', K") sont disposées dans le laveur à flux continu (G) pour la dispersion du liquide de lavage (W).

8. Dispositif selon l'une des revendications 5 à 7, **caractérisé en ce que** le liquide contaminé est injecté par des buses d'extinction (15) dans la zone d'extinction (Q) dans une conduite d'injection (16), le liquide contaminé étant de préférence séparé via un piège à eau (24) au bout de la zone d'extinction (Q) et acheminé en rond via un bassin de décantation (19).

9. Dispositif selon l'une des revendications 1 à 8, **caractérisé en ce qu'**au moins une conduite d'équilibrage (22) en liaison active, activable de préférence en fonction des besoins, avec le bassin de décantation (19) est disposée sur l'extraction d'eau (5, 5', 5") et/ou sur un réservoir tampon (8, 8', 8").

10. Procédé pour la purification d'un flux de gaz, comprenant:
- l'introduction d'un flux de gaz à traiter dans un sens de circulation (11) dans une conduite (1) munie d'un séparateur à flux continu (G);
- l'injection d'un liquide de lavage non contaminé (W) dans le séparateur à flux continu (G), la production d'une rotation du flux de gaz avec un générateur de tourbillons (10), la séparation de liquide contaminé (K) du flux de gaz via une extraction d'eau (5) et l'évacuation du gaz purifié (14) via un tube plongeur (13);
- l'entreposage du liquide contaminé (K) dans un réservoir tampon (8);
- l'injection du liquide contaminé (K) par des buses d'injection (4') dans un laveur par pulvérisation (I) dans la conduite (1) en amont du séparateur à flux continu (G), la séparation du liquide contaminé (K') dans une extraction d'eau (5') montée en aval dans le sens de circulation (11) et
- l'entreposage du liquide contaminé (K') dans un réservoir tampon (8').

11. Procédé selon la revendication 10, **caractérisé en ce qu'**au moins un autre laveur par pulvérisation (II, III, ...) est utilisé en amont du premier laveur par pulvérisation (I), le liquide contaminé (K', K", ...) qui provient du laveur par pulvérisation (I, II) situé en aval dans le sens de circulation étant utilisé pour les buses d'injection du laveur par pulvérisation (II, III) situé en amont dans le sens de circulation.

12. Procédé selon la revendication 10 ou 11, **caractérisé en ce que** le gaz d'échappement (12) est refroidi en amont des laveurs par pulvérisation (I, II, III, ...) dans une zone d'extinction (Q), de préférence en utilisant le liquide contaminé (K', K", K"'), en particulier provenant du bassin de décantation (19).

13. Procédé selon l'une des revendications 10 à 12, **caractérisé en ce que** le liquide (K', K", K"', ...) issu d'un laveur par pulvérisation (I, II, III, ...), de préférence de celui situé le plus loin en amont, est amené
- dans un bassin de décantation (19),
- dans une sortie de flux partiel (17) et/ou
- dans un régénérateur (25) formant un puits de polluants ou de COV pour le liquide (K', K", K"', ...), de préférence avec le liquide le plus fortement contaminé (K"').

14. Procédé selon l'une des revendications 10 à 13, **caractérisé en ce que** des buses d'injection (4) ayant une dispersion supérieure aux buses d'injection (4', 4", 4"') des laveurs par pulvérisation (I, II, III, ...) pour le liquide contaminé (K, K', K") sont utilisées dans le laveur à flux continu (G) pour la dispersion du liquide de lavage (W).

15. Procédé selon l'une des revendications 10 à 14, **caractérisé en ce que** le liquide contaminé est injecté dans une conduite d'injection (16) par des buses d'extinction (15) dans la zone d'extinction (Q), le liquide contaminé étant de préférence séparé via un piège à eau (24) au bout de la zone d'extinction (Q) et acheminé en rond via un bassin de décantation (19).
